Europäisches Patentamt

(19) European Patent Office

Office européen des brevets

(11) Veröffentlichungsnummer: **0 032 993**
**B2**

(12) # NEUE EUROPÄISCHE PATENTSCHRIFT

(45) Veröffentlichungstag der neuen Patentschrift:
23.09.87

(51) Int. Cl.⁴: **C 08 L 25/04,** C 08 K 5/06

(21) Anmeldenummer: **80107661.3**

(22) Anmeldetag: **05.12.80**

(54) **Flammgeschützte Styrolpolymerisate.**

(30) Priorität: **13.12.79 DE 2950098**

(43) Veröffentlichungstag der Anmeldung:
**05.08.81 Patentblatt 81/31**

(45) Bekanntmachung des Hinweises auf die Patenterteilung:
**21.09.83 Patentblatt 83/38**

(45) Bekanntmachung des Hinweises auf die Entscheidung
über den Einspruch:
**23.09.87 Patentblatt 87/39**

(84) Benannte Vertragsstaaten:
**BE DE FR GB IT NL**

(56) Entgegenhaltungen:
**GB-A-1 182 964**
**GB-A-1 182 964**
**US-A-3 093 599**
**US-A-3 639 302**
**US-A-4 028 285**

**Kirk-Othmer "Encyclopedia of Chemical
Technology", Band 9 (1966), S. 852/853
Kuryla, W.C. und Papa, A.J. "Flame Retardancy of
Polymeric Materials", Bd. 2, S. 12 (1973) u. Bd. 3, S.
215-217
Isaacs J.L."The Oxygen Intex Flammability Test" in
"Flammability of Solid Plastics", Bd. 7 S. 1 (1974)**

**Die Akte enthält technische Angaben, die nach
dem Eingang der Anmeldung eingereicht wurden
und die nicht in dieser Patentschrift enthalten sind.**

(73) Patentinhaber: **BASF Aktiengesellschaft, Carl-
Bosch- Strasse 38, D-6700 Ludwigshafen (DE)**

(72) Erfinder: **Hahn, Klaus, Dr. Chem., Burggasse 2,
D-6840 Lampertheim (DE)**
Erfinder: **Naarmann, Herbert, Dr. Chem.,
Haardtblick 15, D-6719 Wattenheim (DE)**
Erfinder: **Penzien, Klaus, Dr. Chem., Bensheimer
Ring 18, D-6710 Frankenthal (DE)**

EP 0 032 993 B2

**Beschreibung**

Es ist bekannt, dass halogenhaltige organische Verbindungen wirksame Flammschutzmittel für Styrolpolymerisate sind. Um eine ausreichende Flammschutzwirkung zu erzielen, müssen den Polymerisaten verhältnismässig grosse Mengen der Halogenverbindungen zugesetzt werden. Dadurch werden jedoch viele Eigenschaften nachteilig beeinflusst.

Es ist ausserdem bekannt, dass die Flammschutzwirkung von Halogenverbindungen durch synergistisch wirkende Zusätze verstärkt werden kann. Dadurch wird es möglich, die Menge der Zusatzstoffe erheblich zu verringern. Bekannte und gebräuchliche Synergisten sind z. B. organische Peroxide, wie Dicumylperoxid. Diese haben jedoch den Nachteil, dass sie toxisch sind und sich mitunter explosionsartig zersetzen. Bei der Handhabung und Lagerung dieser Substanzen müssen daher aufwendige Sicherheitsvorkehrungen getroffen werden. Ausserdem zerfallen Peroxide auch bei Zimmertemperatur langsam, so dass der Flammschutz bei sehr lange lagernden peroxidhaltigen Styrolpolymerisaten an Wirksamkeit verlieren kann. Der Zerfall der Peroxide verstärkt sich natürlich mit steigender Temperatur; es ist daher nicht möglich, peroxidische Synergisten bei der Flammschutzausrüstung von Styrolpolymerisaten zu verwenden, die bei verhältnismässig hohen Temperaturen verarbeitet werden. Im Falle der Schaumextrusion von Styrolpolymerisaten, die bei Temperaturen um 200°C durchgeführt wird, können deshalb keine peroxidischen Synergisten eingesetzt werden.

Auch andere bekannte Flammschutzsynergisten, wie z. B. organische Verbindungen mit labilen C-C- oder N-N-Bindungen, zerfallen bei längerer Lagerung oder bei erhöhter Temperatur.

Der Erfindung lag also die Aufgabe zugrunde, einen Flammschutzsynergisten für Styrolpolymerisate, die ein halogenhaltiges Flammschutzmittel, sowie gegebenenfalls ein Treibmittel enthalten, bereitzustellen, der die Nachteile der bekannten Peroxidsynergisten nicht aufweist und insbesondere bei erhöhten Temperaturen stabil ist.

Die Aufgabe wird erfindungsgemäss dadurch gelöst, dass als Flammschutzsynergist 2,2-Bis-(4-allyloxy-3,5-dibromphenyl)propan in Mengen von 0,01 bis 1,0 Gew.-%, bezogen auf die Formmasse, eingesetzt wird.

Der Flammschutzsynergist ist eine an sich bekannte Verbindung. Er wird in der Literatur auch als Tetrabromdiandiallyläther oder als Diallyläther von Tetrabrombisphenol A bezeichnet. In der GB-PS Nr. 1 206 171 und in der GB-PS Nr. 1 334 638 ist die Verwendung dieser Bromverbindung als Flammschutzmittel für Kunststoffe, z. B. auch für Styrolpolymerisate beschrieben. Es wird dort aber nicht empfohlen, das 2,2-Bis-(4-allyloxy-3,5-dibromphenyl)propan zusammen mit anderen Halogenverbindungen einzusetzen; erst recht nicht wird auf eine mögliche synergistische Wirkung hingewiesen.

Der erfindungsgemässe Flammschutzsynergist lässt sich gefahrlos und ohne besondere Vorsichtsmassnahmen lagern und handhaben. Er hat eine ausgezeichnete Wirksamkeit, und übertrifft darin beispielsweise das übliche Dicumylperoxid. Styrolpolymerisate, die erfindungsgemäss flammfest ausgerüstet wurden, verlieren auch bei längerer Lagerung nicht ihre Flammschutzeigenschaften. Schliesslich können derartige Styrolpolymerisate auch bei höheren Temperaturen thermoplastisch verarbeitet werden, beispielsweise durch Extrusion bei Temperaturen um 150 bis 200°C.

Styrolpolymerisate im Sinne der Erfindung sind Polystyrol und Mischpolymerisate des Styrols, die mindestens 50 Gew.-% Styrol einpolymerisiert enthalten. Als Comonomere kommen z.B. in Frage: α-Methylstyrol, Acrylnitril, Methacrylnitril, Ester der Acryl- und Methacrylsäure, Butadien und geringe Mengen Divinylbenzol. Die Formmassen können auch elastifizierende Polymerisatzusätze enthalten, wie z. B. kautschukartige Butadien-, Äthylen- oder Acrylesterpolymerisate.

Als halogenhaltige Flammschutzmittel kommen organische Brom- und Chlorverbindungen in Frage, die vorzugsweise mindestens 50 Gew.-% Brom oder Chlor enthalten. Eine geeignete Chlorverbindung ist Chlorparaffin. Von den bevorzugten Bromverbindungen sind beispielsweise zu nennen:

1,2,5,6,9,10-Hexabromcyclododecan,
Tetrabromdibenzalaceton,
Pentabromphenylallyläther,
Pentabrommonochlorcyclohexan,
1,1,2,3,4,4-Hexabrombuten-2,
2,5-Bis-(tribrommethyl)-1,3,4-thiadiazol,
2,4,6-Tris-(tribrommethyl)-1,3,5-triazin,
Tetrabromäthan,
Bromtrichlormethan,
1,2,5,6-Tetrabromhexan,
Hexabrombenzol,
Pentabromphenol,
Pentabromdiphenyläther,
Tris-(dibrompropyl)-phosphat,
Octabromcyclohexadecan
α-Bromnaphthalin.

Die Formmassen enthalten im allgemeinen 0,1 bis 5 Gew.-% des halogenhaltigen Flammschuztmittels, wobei die zuzusetzende Menge von dessen Wirksamkeit abhängt. Die bevorzugten Halogenverbindungen werden in folgenden Mengen eingesetzt:

Hexabromcyclododecan: 0,4 bis 1,5 Gew,-%,

Hexabrombuten: 0,2 bis 1,0 Gew.-%,

Tetrabromdibenzalaceton: 0,2 bis 1,0 Gew.-%,

Pentabromphenylallyläther: 0,4 bis 2,0 Gew,-%,

Chlorparaffin: 1,0 bis 4,0 Gew,-%.

Die Formmassen enthalten den erfindungsgemässen Flammschutzsynergisten in Mengen von 0,01 bis 1,0 Gew.-%, wobei das Gewichtsverhältnis Flammschutzmittel zu Synergist vorzugsweise zwischen 50:1 und 2:1, insbesondere zwischen 20:1 und 4:1 liegen soll.

Die erfindungsgemässen thermoplastischen Formmassen können nach üblichen Methoden, z. B. durch Extrusion oder Spritzgiessen zu selbstverlöschenden Formkörpern verarbeitet werden.

Besondere Bedeutung hat die Erfindung für treibmittelhaltige, expandierbare Styrolpolymerisate. Diese enthalten im allgemeinen 2 bis 10 Gew,-% einer flüssigen oder gasförmigen organischen Verbindung, welche das Polymerisat nicht löst, und deren Siedepunkt unterhalb des Erweichungspunktes des Polymerisats liegt. Als Treibmittel kommen insbesondere aliphatische oder cycloaliphatische Kohlenwasserstoffe und Chlorkohlenwasserstoffe, wie Butan, Pentan, Hexan, Heptan, Cyclohexan, Methylchlorid und Dichlordifluormethan in Frage. Auch feste, sich bei erhöhter Temperatur unter Bildung von Gasen zersetzende Treibmittel sind geeignet, wie z. B. Azodicarbonamid oder Natriumhydrogencarbonat.

Die treibmittelhaltigen Styrolpolymerisate können z. B. hergestellt werden durch Polymerisation in wässeriger Suspension in Gegenwart des Treibmittels, des Flammschutzmittels und des Synergisten. Dabei entstehen Perlen mit einem Durchmesser von etwa 0,5 bis 5 mm. Man kann derartige Perlen, die das Treibmittel und den Synergisten enthalten, auch noch nachträglich mit dem Flammschutzmittel beschichten.

Es ist auch möglich, das Treibmittel erst nachträglich, gegebenenfalls zusammen mit Flammschutzmittel und Synergisten, im teilchenförmigen Styrolpolymerisat zu imprägnieren, z.B, durch Behandeln in wässeriger Suspension.

Man kann auch das Styrolpolymerisat in einem Lösungsmittel auflösen, Treibmittel, Flammschutzmittel und Synergisten zusetzen und das Lösungsmittel wieder verdampfen.

Schliesslich ist es auch möglich, das Treibmittel, gegebenenfalls wieder zusammen mit Flammschutzmittel und Synergist, den Styrolpolymerisat in der Schmelze zuzusetzen, das treibmittelhaltige Polymerisat unter solchen Bedingungen zu extrudieren, dass es nicht aufschäumt, und die ausgepressten Stränge zu zerkleinern.

Bei allen diesen Methoden entstehen teilchenförmige, treibmittelhaltige Styrolpolymerisate, die beim Erhitzen über den Siedepunkt des Treibmittels zu Schaumstoffpartikeln expandieren, die gegebenenfalls nach bekannten Methoden zu Schaumstoff - Formkörpern versintert werden können.

Man kann grundsätzlich Schaumstoffe auch direkt durch Extrusion von Styrolpolymerisaten, denen in der Schmelze Treibmittel, Flammschutzmittel und Synergist zugesetzt worden war, herstellen, wenn man die Schmelze direkt an die Atmosphäre auspresst, so dass die Expansion direkt an der Extruderdüse stattfinden kann, Die Styrolpolymerisate können neben Flammschutzmittel, Synergist und gegebenenfalls Treibmittel noch die üblichen Zusatzstoffe, wie z,B, Füllstoffe, Farbpigmente, Gleitmittel, Antistatika, Alterungsschutzmittel, Stabilisatoren, Mittel, welche die Schaumbildung fördern, sowie Mittel zur Verhinderung des Verklebens und zur Verkürzung der Entformzeit enthalten.

Die in den Beispielen genannten Teile und Prozente beziehen sich auf das Gewicht.

1. Schaumfolienversuche

30 Teile Polystyrol werden in 100 Teilen Methylenchlorid gelöst, Zu der Lösung werden 3 Teile Pentan, sowie Flammschutzmittel und Synergist gegeben, Danach giesst man die Lösung auf eine Glasplatte aus und lässt das Methylenchlorid verdampfen. Die so erhaltene Folie wird in Wasserdampf von 100°C aufgeschäumt und im Vakuum getrocknet. Aus der Schaumfolie werden Prüfkörper mit den Abmessungen 0,5 x 15 x 40 cm herausgeschnitten und 5 Sekunden lang in eine Gasflamme von 40 mm Flammenhöhe gehalten, und die Flamme anschliessend mit ruhiger Bewegung entfernt. Die Verlöschzeit des Prüfkörpers ist ein Mass für dessen Flammwidrigkeit und damit für die Wirksamkeit des Flammschutzsystems. Die in Tabelle 1 angegebenen Verlöschzeiten sind Mittelwerte aus 10 Brandtests.

**Tabelle 1**

| Versuch | Flammschutzmittel (%) | Flammschutzsynergist (%) | Verlöschzeiten (s) |
|---|---|---|---|
| 1 | 0,8 Hexabromcyclododecan | — | 11 |
| 2 | 0,8 Tetrabromdiandiallyläther | — | 10 |
| 3 | 0,8 Hexabromcyclododecan | 0,2 Dicumylperoxid | 3 |
| 4 | 0,8 Hexabromcyclododecan | 0,2 Tetrabromdiandiallyläther | 1 |
| 5 | 0,8 Hexabromcyclododecan | 0,1 Tetrabromdiandiallyläther | 1,5 |
| 6 | 0,8 Hexabromcyclododecan | 0,05 Tetrabromdiandiallyläther | 4 |

Die Versuche 4, 5 und 6 sind erfindungsgemäss.

2. Polymerisationsversuche

In einem druckfesten Rührkessel aus korrosionsfreiem Stahl wurde eine Mischung aus 150 Teilen Wasser, 0,1 Teilen Natriumpyrophosphat, 100 Teilen Styrol, 7 Teilen n-Pentan, 0,45 Teilen Benzoylperoxid und 0,15 Teilen tert.-Butylperbenzoat (als Polymerisationsinitiatoren), sowie den aus der Tabelle 2 ersichtlichen Teilen verschiedener Flammschutzmittel und Synergisten unter Rühren auf 90°C erhitzt, Nach 2 h bei 90°C wurden 4 Teile einer 10%igen wässerigen Lösung von Polyvinylpyrrolidon zugegeben. Dann wurde weitere 2 h bei 90°C, anschliessend 2 h bei 100°C und schliesslich 2 h bei 120°C gerührt. Das erhaltene Granulat mit einem mittleren Teilchendurchmesser von 1,5 mm wurde isoliert und getrocknet.

100 Teile des expandierbaren Polystyrolgranulats wurden durch Auftrommeln im Schaufelmischer jeweils drei min lang mit 0,4 Teilen Glycerinmonostearat beschichtet.

Durch Einwirkung von Wasserdampf wurden die expandierbaren, beschichteten Polystyrolteilchen geschäumt und nach eintägiger Lagerung durch weitere Behandlung mit Wasserdampf in einer geschlossenen Form zu Schaumstoffblöcken verschweisst.

Aus den Schaumstoffblöcken wurden mit einem beheizten Draht Streifen der Abmessung 2 x 20 x 40 cm herausgeschnitten. Die Messung der Nachbrennzeit erfolgte an unter 45° geneigten Streifen, die am unteren Ende mit einer leuchtenden Erdgasflamme entzündet wurden. Die Zeit bis zum Erlöschen der Flamme wurde gemessen und der Mittelwert aus 20 Einzelmessungen bestimmt. Der B2-Brandtest erfolgte nach DIN 4102. Die Ergebnisse sind in der Tabelle 2 zusammengestellt.

**Tabelle 2 - Polymerisationsversuche**

| Versuch | Flammschutzmittel (%) | Flammschutzsynergist (%) | Verlöschzeiten (s) | B2-Test (DIN 4102) |
|---------|----------------------|--------------------------|--------------------|--------------------|
| 1 | 0,64 Hexabromcyclododecan | — | 13 | nicht bestanden |
| 2 | 0,64 Tetrabromdiandiallyläther | — | 11 | nicht bestanden |
| 3 | 0,64 Hexabromcyclododecan | 0,2 Dicumylperoxid | 1 | bestanden |
| 4 | 0,64 Hexabromcyclododecan | 0,2 Tetrabromdiandiallyläther | 1 | bestanden |
| 5 | 0,64 Hexabromcyclododecan | 0,1 Tetrabromdiandiallyläther | 2 | bestanden |

Die Versuche 4 und 5 sind erfindungsgemäss.

3. Extrusionsversuch

Polystyrol wurde mit 6,5 % einer Mischung aus 80 % n-Pentan und 20 % i-Pentan, sowie verschiedenen Mengen an Flammschutzmitteln und Synergisten in einem geheizten Zweischneckenextruder aufgeschmolzen. Die Massetemperatur im Extruder betrug 160 bis 170°C. Die homogenisierte Mischung wurde durch eine Lochplatte mit Düsenquerschnitt von 4,5 mm in ein Wasserbad von 20°C extrudiert und nach einer Verweilzeit von 12 s einer Granuliervorrichtung mit einem Abzugswalzenpaar zugeführt. Ein Messerfräser schnitt den Strang zu zylinderförmigen Granulat.

Die Granulate wurden unter Einwirkung von Wasserdampf zu Schaumstoffteilchen mit einem Schüttgewicht von 9 g/l aufgeschäumt.

Zur Prüfung des Brandverhaltens wurden die geschäumten und 5 d zwischengelagerten Teilchen in einen aus Maschendraht bestehenden Würfel mit 1 l Rauminhalt gefüllt. Die Maschenweite betrug 5 mm. Zur Messung der Nachbrennzeit wurde das Schäumgut 30 mm von der Oberkante des Würfels mit einer unter 45° geneigten 25 mm hohen leuchtenden Erdgasflamme entzündet und die Flamme anschliessend entfernt. Die Verlöschzeit wurde gemessen und der Mittelwert aus 20 Einzelmessungen bestimmt.

Die Ergebnisse sind in der Tabelle 3 zusammengestellt.

**Tabelle 3 - Extrusionsversuche**

| Versuch | Flammschutzmittel (%) | Flammschutzsynergist (%) | Verlöschzeiten (s) |
|---|---|---|---|
| 1 | 3 Hexabromcyclododecan | — | 3 |
| 2 | 3 Tetrabromdiandiallyläther | — | 4,5 |
| 3 | 1,5 Hexabromcyclododecan | — | 12 |
| 4 | 1,5 Tetrabromdiandiallyläther | — | 12 |
| 5 | 1,5 Hexabromcyclododecan | 0,2 Dicumylperoxid | 9 |
| 6 | 1,5 Hexabromcyclododecan | 0,2 Tetrabromdiandiallyläther | 2 |
| 7 | 1,5 Hexabromcyclododecan | 0,1 Tetrabromdiandiallyläther | 4 |

Die Versuche 6 und 7 sind erfindungsgemäss.

**Patentanspruch**

Thermoplastische Formmasse aus einem Styrolpolymerisat, enthaltend ein halogenhaltiges Flammschutzmittel, eine Allylverbindung als Flammschutzsynergisten, sowie gegebenenfalls ein Treibmittel, <u>dadurch gekennzeichnet</u>, daß der Flammschutzsynergist 2,2-Bis-(4-allyloxy-3,5-dibromphenyl)-propan ist, welches in der Formmasse in einer Menge von 0,01 bis 1,0 Gew.-% enthalten ist.

**Claim**

A thermoplastic molding material consisting of a styrene polymer containing a halogen-containing flame retardant, an allyl compound as flame retardant synergist and, if desired, a blowing agent, wherein the flame retardant synergist is 2,2-bis-(4-allyloxy-3,5-dibromophenyl)-propane which is present in the molding material in an amount of from 0.01 to 1.0 % by weight.

**Revendication**

Matière à mouler thermoplastique à base d'un polymère styrénique, contenant un agent ignifugeant halogéné, un composé allylique en tant qu'additif de potentialisation de l'effet ignifugeant et éventuellement un agent porogène, caractérisée en ce que l'addidif de potentialisation de l'effet ignifugeant est le 2,2-bis-(4-allyloxy-3,5-dibromophényl)-propane, contenu dans la matière à mouler dans une proportion de 0,01 à 1,0 % en poids.